# EUROPEAN PATENT APPLICATION

(11) **EP 2 175 355 A1**
(43) Date of publication of application: **14.04.2010**
(21) Application number: 08166050.8
(22) Date of filing: 07.10.2008
(51) Int. Cl.: G06F 3/048

(54) **Portable electronic device and method of secondary character rendering and entry**

(71) Applicant: Research In Motion Limited, Waterloo, Ontario N2L 3W8 (CA)
(72) Inventor: Rider, Douglas, Ottawa Ontario K2J 2M5 (CA)
(74) Representative: MERH-IP Matias Erny Reichl Hoffmann

(57) **Abstract**

A method of secondary character rendering and entry in a portable electronic device that has a touch screen display includes rendering a virtual keyboard of a plurality of virtual input keys in a graphical user interface on the touch screen display; detecting a touch event at one of the virtual input keys on the touch screen display; detecting a continuation of the touch event at the one of the virtual input keys; rendering a secondary virtual keyboard of one or more secondary virtual input key on the touch screen display in response to detecting the continuation of the touch event, the secondary virtual keyboard being associated with the virtual input key; detecting a distinct and separate secondary touch event at the secondary virtual input key on the touch screen display; and rendering a secondary character associated with the secondary virtual input key on the touch screen display in response to detecting the secondary touch event.

## Description

The present disclosure relates generally to portable electronic devices including touch screen display devices and a method of secondary character rendering and entry.

Electronic devices, including portable electronic devices, have gained widespread use and can provide a variety of functions including, for example, telephonic, electronic messaging and other personal information manager (PIM) application functions. Portable electronic devices can include several types of devices including mobile stations such as simple cellular telephones, smart telephones, wireless PDAs, and laptop computers with wireless 802.11 or Bluetooth capabilities. These devices run on a wide variety of networks from data-only networks such as Mobitex and DataTAC to complex voice and data networks such as GSM/GPRS, CDMA, EDGE, UMTS and CDMA2000 networks.

Portable electronic devices such as PDAs or smart telephones are generally intended for handheld use and ease of portability. Smaller devices are generally desirable for portability. A touch screen display for input and output is particularly useful on such handheld devices as such handheld devices are small and are therefore limited in space available for user input and output devices. Further, the screen content on the touch screen display devices can be modified depending on the functions and operations being performed. Even still, these devices have a limited area for rendering content on the touch screen display and for rendering features or icons, for example, for user interaction. With continued demand for decreased size of portable electronic devices, touch screen displays continue to decrease in size.

Improvements in touch screen devices are therefore desirable.

### GENERAL

According to one aspect there is preferably provided a method of secondary character rendering and entry in a portable electronic device that has a touch screen display. The method may comprise rendering a virtual keyboard of a plurality of virtual input keys in a graphical user interface on the touch screen display; detecting a touch event at one of the virtual input keys on the touch screen display; detecting a continuation of the touch event at the one of the virtual input key; rendering a secondary virtual keyboard of one or more secondary virtual input key within the touch-sensitive area in response to detecting the continuation of the touch event, the secondary virtual keyboard being associated with the one of the virtual input keys; detecting a distinct and separate secondary touch event at the secondary virtual input key on the touch screen display; and rendering a secondary character associated with the secondary virtual input key on the touch screen display in response to detecting the secondary touch event.

In an embodiment, the continuation of the touch event may be a touch and hold event or a double-touch event.

In another embodiment, the method may further comprise: detecting a continuation of the secondary touch event at the secondary virtual input key; and rendering a modified version of the secondary character associated with the secondary virtual input key on the touch screen display.

In a further embodiment, the modified version of the secondary character associated with the secondary virtual input key may be an upper case version of the secondary character.

In another embodiment, the method may comprise unrendering the secondary virtual keyboard in response to an absence of the secondary touch event within a timeout period.

In a further embodiment, each virtual input key may have one or more characters associated therewith and each secondary virtual input key corresponds to the one or more characters of the virtual input key associated with the secondary virtual keyboard.

According to another aspect there may be provided a portable electronic device. The portable electronic device includes a touch screen display and functional components. The functional components may comprise a processor connected to the touch screen display, and a memory device for storage of computer-readable program code executable by the processor for rendering a virtual keyboard of a plurality of virtual input keys in a graphical user interface on the touch screen display; detecting a touch event at one of the virtual input keys on the touch screen display; detecting a continuation of the touch event at the one of the virtual input keys; rendering a secondary virtual keyboard of a plurality of secondary virtual input keys on the touch screen display in response to detecting the continuation of the touch event; detecting a distinct and separate secondary touch event at the secondary virtual input key within the touch-sensitive area on the touch screen display; and rendering a character associated with the secondary virtual input key on the touch screen display.

According to another aspect, there may be provided a computer-readable medium. The computer-readable medium may have computer-readable code embodied therein for execution by a processor for rendering a virtual keyboard of a plurality of virtual input keys on a touch screen display; detecting a touch event at one of the virtual input keys on the touch screen display; detecting a continuation of the touch event at the one of the virtual input keys; rendering a secondary virtual keyboard of one or more secondary virtual input key on the touch screen display in response to detecting the continuation of the touch event; detecting a distinct and separate secondary touch event at the secondary virtual input key on the touch screen display; and rendering a character associated with the secondary virtual input key on the touch screen display.

### BRIEF DESCRIPTION OF THE DRAWINGS

Embodiments of the present disclosure will now be described, by way of example only, with reference to the attached Figures, wherein:

Figure 1 is a block diagram of a portable electronic device according to one example;

Figure 2 is a front view of an exemplary portable electronic shown in a portrait orientation;

Figure 3 is a simplified sectional side view of the portable electronic device of Figure 2 (not to scale), with a switch shown in a rest position;

Figure 4 is a flow chart showing a method for controlling an electronic device according to an embodiment; and

Figures 5 and 6 are front views of the portable electronic device of Figure 2 depicting GUIs for user interaction.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to a portable electronic device including a touch screen display and control of the portable electronic device. Examples of portable electronic devices include mobile, or handheld, wireless communication devices such as pagers, cellular phones, cellular smart-phones, wireless organizers, personal digital assistants, wirelessly enabled notebook computers and the like.

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). The portable electronic device may also be a portable device without wireless communication capabilities as a handheld electronic game device, digital photograph album, digital camera and the like.

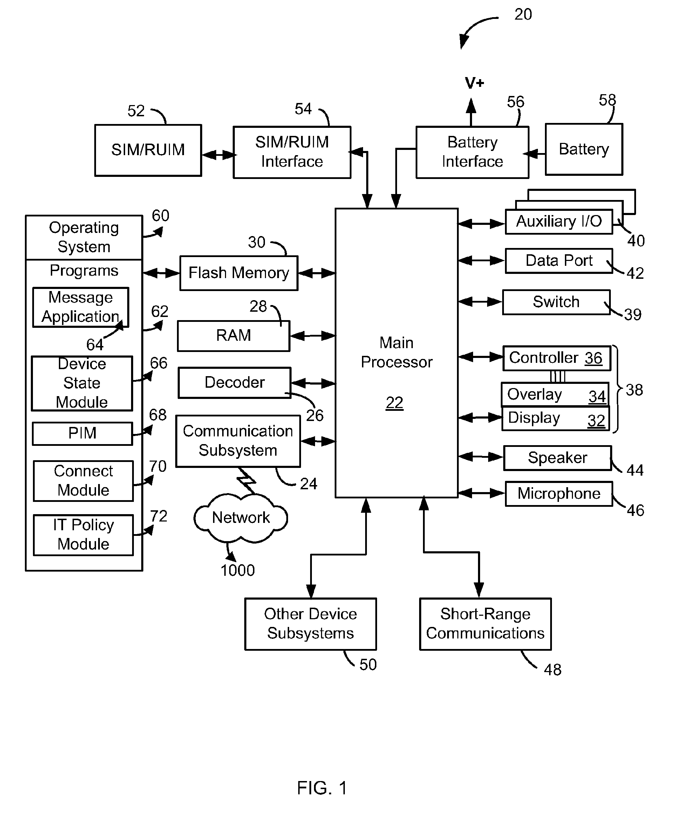

Referring first to Figure 1, there is shown therein a block diagram of an exemplary embodiment of a portable electronic device 20. The portable electronic device 20 includes a number of components such as the processor 22 that controls the overall operation of the portable electronic device 20. Communication functions, including data and voice communications, are performed through a communication subsystem 24. Data received by the portable electronic device 20 can be decompressed and decrypted by a decoder 26, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 24 receives messages from and sends messages to a wireless network 1000. In this exemplary embodiment of the portable electronic device 20, the communication subsystem 24 is configured in accordance with the Global System for Mobile Communication (GSM) and General Packet Radio Services (GPRS) standards. The GSM/GPRS wireless network is used worldwide. New standards such as Enhanced Data GSM Environment (EDGE) and Universal Mobile Telecommunications Service (UMTS) are believed to have similarities to the network behavior described herein, and it will also be understood by persons skilled in the art that the embodiments described herein are intended to use any other suitable standards that are developed in the future. The wireless link connecting the communication subsystem 24 with the wireless network 1000 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 1000 associated with portable electronic device 20 is a GSM/GPRS wireless network in one exemplary implementation, other wireless networks may also be associated with the portable electronic device 20 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA1000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems. The processor 22 also interacts with additional subsystems such as a Random Access Memory (RAM) 28, a flash memory 30, a display 32 with a touch-sensitive overlay 34 connected to an electronic controller 36 that together make up a touch screen display 38, a switch 39, an auxiliary input/output (I/O) subsystem 40, a data port 42, a speaker 44, a microphone 46, short-range communications 48 and other device subsystems 50. The touch-sensitive overlay 34 and the electronic controller 36 provide a touch-sensitive input device and the processor 22 interacts with the touch-sensitive overlay 34 via the electronic controller 36.

Some of the subsystems of the portable electronic device 20 perform communication-related functions, whereas other subsystems may provide "resident" or on-device functions. By way of example, the display 32 and the touch-sensitive overlay 34 may be used for both communication-related functions, such as entering a text message for transmission over the network 1000, and device-resident functions such as a calculator or task list.

The portable electronic device 20 can send and receive communication signals over the wireless network 1000 after network registration or activation procedures have been completed. Network access is associated with a subscriber or user of the portable electronic device 20. To identify a subscriber according to the present embodiment, the portable electronic device 20 uses a SIM/RUIM card 52 (i.e. Subscriber Identity Module or a Removable User Identity Module) inserted into a SIM/RUIM interface 54 for communication with a network such as the network 1000. The SIM/RUIM card 52 is one type of a conventional "smart card" that can be used to identify a subscriber of the portable electronic device 20 and to personalize the portable electronic device 20, among other things. In the present embodiment the portable electronic device 20 is not fully operational for communication with the wireless network 1000 without the SIM/RUIM card 52. By inserting the SIM/RUIM card 52 into the SIM/RUIM interface 54, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card 52 includes a processor and memory for storing information. Once the SIM/RUIM card 52 is inserted into the SIM/RUIM interface 54, it is coupled to the processor 22. In order to identify the subscriber, the SIM/RUIM card 52 can include some user parameters such as an International Mobile Subscriber Identity (IMSI). An advantage of using the SIM/RUIM card 52 is that a subscriber is not necessarily bound by any single physical portable electronic device. The SIM/RUIM card 52 may store additional subscriber information for a portable electronic device as well, including datebook (or calendar) information and recent call information. Alternatively, user identification information can also be programmed into the flash memory 30.

The portable electronic device 20 is a battery-powered device and includes a battery interface 56 for receiving one or more rechargeable batteries 58. In at least some embodiments, the battery 58 can be a smart battery with an embedded microprocessor. The battery interface 56 is coupled to a regulator (not shown), which assists the battery 58 in providing power V+ to the portable electronic device 20. Although current technology makes use of a battery, future technologies such as micro fuel cells may provide the power to the portable electronic device 20.

The portable electronic device 20 also includes an operating system 60 and software components 62 to 72 which are described in more detail below. The operating system 60 and the software components 62 to 72 that are executed by the processor 22 are typically stored in a persistent store such as the flash memory 30, which may alternatively be a read-only memory (ROM) or similar storage element (not shown). Those skilled in the art will appreciate that portions of the operating system 60 and the software components 62 to 72, such as specific device applications, or parts thereof, may be temporarily loaded into a volatile store such as the RAM 28. Other software components can also be included, as is well known to those skilled in the art.

The subset of software applications 62 that control basic device operations, including data and voice communication applications, will normally be installed on the portable electronic device 20 during its manufacture. Other software applications include a message application 64 that can be any suitable software program that allows a user of the portable electronic device 20 to send and receive electronic messages. Various alternatives exist for the message application 64 as is well known to those skilled in the art. Messages that have been sent or received by the user are typically stored in the flash memory 30 of the portable electronic device 20 or some other suitable storage element in the portable electronic device 20. In at least some embodiments, some of the sent and received messages may be stored remotely from the device 20 such as in a data store of an associated host system that the portable electronic device 20 communicates with.

The software applications can further include a device state module 66, a Personal Information Manager (PIM) 68, and other suitable modules (not shown). The device state module 66 provides persistence, i.e. the device state module 66 ensures that important device data is stored in persistent memory, such as the flash memory 30, so that the data is not lost when the portable electronic device 20 is turned off or loses power.

The PIM 68 includes functionality for organizing and managing data items of interest to the user, such as, but not limited to, e-mail, contacts, calendar events, voice mails, appointments, and task items. A PIM application has the ability to send and receive data items via the wireless network 1000. PIM data items may be seamlessly integrated, synchronized, and updated via the wireless network 1000 with the portable electronic device subscriber's corresponding data items stored and/or associated with a host computer system. This functionality creates a mirrored host computer on the portable electronic device 20 with respect to such items. This can be particularly advantageous when the host computer system is the portable electronic device subscriber's office computer system.

The portable electronic device 20 also includes a connect module 70, and an information technology (IT) policy module 72. The connect module 70 implements the communication protocols that are required for the portable electronic device 20 to communicate with the wireless infrastructure and any host system, such as an enterprise system, that the portable electronic device 20 is authorized to interface with.

The connect module 70 includes a set of APIs that can be integrated with the portable electronic device 20 to allow the portable electronic device 20 to use any number of services associated with the enterprise system. The connect module 70 allows the portable electronic device 20 to establish an end-to-end secure, authenticated communication pipe with the host system. A subset of applications for which access is provided by the connect module 70 can be used to pass IT policy commands from the host system to the portable electronic device 20. This can be done in a wireless or wired manner. These instructions can then be passed to the IT policy module 72 to modify the configuration of the device 20. Alternatively, in some cases, the IT policy update can also be done over a wired connection.

Other types of software applications can also be installed on the portable electronic device 20. These software applications can be third party applications, which are added after the manufacture of the portable electronic device 20. Examples of third party applications include games, calculators, utilities, etc.

The additional applications can be loaded onto the portable electronic device 20 through at least one of the wireless network 1000, the auxiliary I/O subsystem 40, the data port 42, the short-range communications subsystem 48, or any other suitable device subsystem 50. This flexibility in application installation increases the functionality of the portable electronic device 20 and may provide enhanced on-device functions, communication-related functions, or both. For example, secure communication applications may enable electronic commerce functions and other such financial transactions to be performed using the portable electronic device 20.

The data port 42 enables a subscriber to set preferences through an external device or software application and extends the capabilities of the portable electronic device 20 by providing for information or software downloads to the portable electronic device 20 other than through a wireless communication network. The alternate download path may, for example, be used to load an encryption key onto the portable electronic device 20 through a direct and thus reliable and trusted connection to provide secure device communication.

The data port 42 can be any suitable port that enables data communication between the portable electronic device 20 and another computing device. The data port 42 can be a serial or a parallel port. In some instances, the data port 42 can be a USB port that includes data lines for data transfer and a supply line that can provide a charging current to charge the battery 58 of the portable electronic device 20.

The short-range communications subsystem 48 provides for communication between the portable electronic device 20 and different systems or devices, without the use of the wireless network 1000. For example, the short-range communications subsystem 48 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download is processed by the communication subsystem 24 and input to the processor 22. The processor 22 then processes the received signal for output to the display 32 or alternatively to the auxiliary I/O subsystem 40. A subscriber may also compose data items, such as e-mail messages, for example, using the touch-sensitive overlay 34 on the display 32 that are part of the touch screen display 38, and possibly the auxiliary I/O subsystem 40. The auxiliary I/O subsystem 40 may include devices such as: a mouse, track ball, infrared fingerprint detector, or a roller wheel with dynamic button pressing capability. A composed item may be transmitted over the wireless network 1000 through the communication subsystem 24.

For voice communications, the overall operation of the portable electronic device 20 is substantially similar, except that the received signals are output to the speaker 44, and signals for transmission are generated by the microphone 46. Alternative voice or audio I/O subsystems, such as a voice message recording subsystem, can also be implemented on the portable electronic device 20. Although voice or audio signal output is accomplished primarily through the speaker 44, the display 32 can also be used to provide additional information such as the identity of a calling party, duration of a voice call, or other voice call related information.

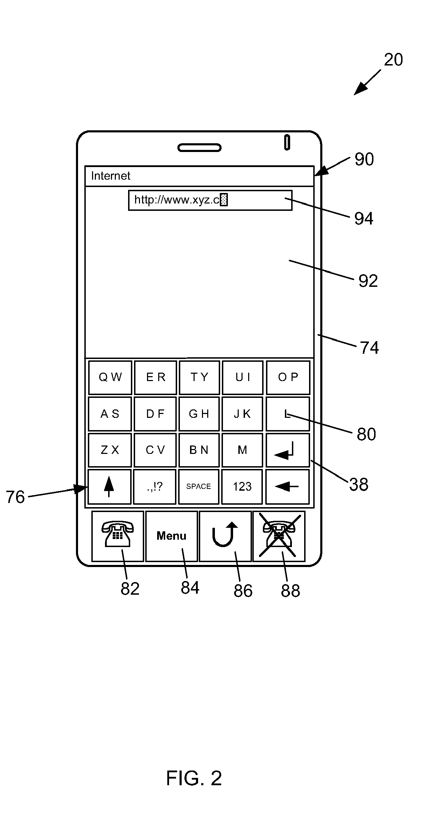

Reference is now made to Figure 2, which shows a front view of an exemplary portable electronic device 20 in portrait orientation. The portable electronic device 20 includes a housing 74 that houses the internal components that are shown in Figure 1 and frames the touch screen display or touch-sensitive display 38 such that the touch screen display 38 is exposed for user-interaction therewith when the portable electronic device 20 is in use. In the exemplary orientation shown in Figure 2, the touch screen display 38 includes a portrait mode virtual keyboard 76 for user entry of data in the form of, for example, text during operation of the portable electronic device 20. It will be appreciated that such a virtual keyboard may be used for data entry in any suitable application such as in an electronic mail application, during electronic mail composition or in any other suitable application. The portrait mode virtual keyboard 76 of Figure 2 is provided for data entry in an Internet browser application and is shown as a reduced keyboard for exemplary purposes. The present disclosure is not limited to the portrait mode virtual keyboard 76 shown as other keyboards including other reduced keyboards or full keyboards are possible.

The touch screen display 38 can be any suitable touch screen display such as a capacitive touch screen display. A capacitive touch screen display 38 includes the display device, such as an LCD display 32 and the touch-sensitive overlay 34, in the form of a capacitive touch-sensitive overlay 34. It will be appreciated that the capacitive touch-sensitive overlay 34 includes a number of layers in a stack and is fixed to the display 32 via a suitable optically clear adhesive. The layers can include, for example a substrate fixed to the LCD display 32 by a suitable adhesive, a ground shield layer, a barrier layer, a pair of capacitive touch sensor layers separated by a substrate or other barrier layer, and a cover layer fixed to the second capacitive touch sensor layer by a suitable adhesive. The capacitive touch sensor layers can be any suitable material such as patterned indium tin oxide (ITO).

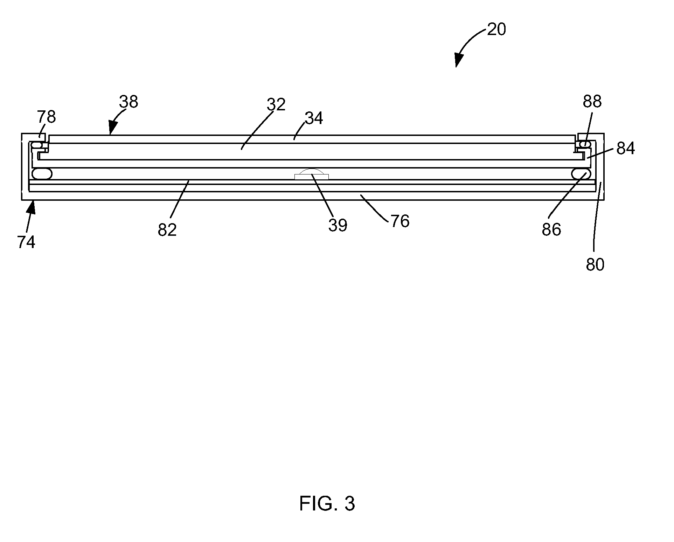

As best shown in Figure 3, the housing 74 includes a back 76, a frame 78, which frames the touch-sensitive display 38, sidewalls 80 that extend between and generally perpendicular to the back 76 and the frame 78, and a base 82 that is spaced from and generally parallel to the back 76. The base 82 can be any suitable base and can include, for example, a printed circuit board or flex circuit board. The back 76 includes a plate (not shown) that is releasably attached for insertion and removal of, for example, the battery 58 and the SIM/RUIM card 52 described above. It will be appreciated that the back 76, the sidewalls 80 and the frame 78 can be injection molded, for example. In the exemplary portable electronic device 20 shown in Figure 2, the frame 78 is generally rectangular with rounded corners although other shapes are possible.

The display 32 and the touch-sensitive overlay 34 can be supported on a support tray 84 of suitable material such as magnesium for providing mechanical support to the display 32 and touch-sensitive overlay 34. The display 32 and touch-sensitive overlay 34 are biased away from the base 82, toward the frame 78 by biasing elements 86 such as gel pads between the support tray 84 and the base 82. Compliant spacers 88, which can also be in the form of gel pads for example, are located between an upper portion of the support tray 84 and the frame 78. The touch screen display 38 is moveable within the housing 74 as the touch screen display 38 can be moved toward the base 82, thereby compressing the biasing elements 86. The touch screen display 38 can also be pivoted within the housing 74 with one side of the touch screen display 38 moving toward the base 82, thereby compressing the biasing elements 86 on the same side of the touch screen display 38 that moves toward the base 82.

In the present example, the switch 39 is supported on one side of the base 82 which can be a printed circuit board while the opposing side provides mechanical support and electrical connection for other components (not shown) of the portable electronic device 20. The switch 39 can be located between the base 82 and the support tray 84. The switch 39, which can be a mechanical dome-type switch, for example, can be located in any suitable position such that displacement of the touch screen display 38 resulting from a user pressing the touch screen display 38 with sufficient force to overcome the bias and to overcome the actuation force for the switch 39, depresses and actuates the switch 39. In the present embodiment the switch 39 is in contact with the support tray 84. Thus, depression of the touch screen display 38 by user application of a force thereto, causes actuation of the switch 39, thereby providing the user with a positive tactile feedback during user interaction with the user interface of the portable electronic device 20. The switch 39 is not actuated in the rest position shown in Figure 3, absent applied force by the user. It will be appreciated that the switch 39 can be actuated by pressing anywhere on the touch screen display 38 to cause movement of the touch screen display 38 in the form of movement parallel with the base 82 or pivoting of one side of the touch screen display 38 toward the base 82. The switch 39 is connected to the processor 22 and can be used for further input to the processor when actuated. Although a single switch is shown any suitable number of switches can be used.

A touch event is detected upon user touching of the touch screen display 38. Such a touch event can be determined upon a user touch at the touch screen display 38 for selection of, for example, a feature in a list, such as a message or other feature of for scrolling in the list or selecting a virtual input key. Signals are sent from the touch-sensitive overlay 34 to the controller 36 when a suitable object such as a finger or other conductive object held in the bare hand of a user, is detected. Thus, the touch event is detected and the X and Y location of the touch are determined. The X and Y location of the touch are determined to fall within the touch-sensitive area defined by the boundary on the touch screen display 38.

In the present example, the X and Y location of a touch event are both determined with the X location determined by a signal generated as a result of capacitive coupling with one of the touch sensor layers and the Y location determined by the signal generated as a result of capacitive coupling with the other of the touch sensor layers. Each of the touch-sensor layers provides a signal to the controller 36 as a result of capacitive coupling with a suitable object such as a finger of a user or a conductive object held in a bare hand of a user resulting in a change in the electric field of each of the touch sensor layers. The signals represent the respective X and Y touch location values. It will be appreciated that other attributes of the user's touch on the touch screen display 38 can be determined. For example, the size and the shape of the touch on the touch screen display 38 can be determined in addition to the location (X and Y values) based on the signals received at the controller 36 from the touch sensor layers.

Referring still to Figure 2, it will be appreciated that a user's touch on the touch screen display 38 is determined by determining the X and Y touch location and user-selected input is determined based on the X and Y touch location and the application executed by the processor 22. In the exemplary screen shown in the front view of Figure 2, the application provides the virtual keyboard 76 having a plurality of virtual input keys or buttons, which can be selected by the user. The user selected virtual input key is matched to the X and Y touch location. Thus, the button selected by the user is determined based on the X and Y touch location and the application. In the example shown in Figure 2, the user enters text via the virtual keyboard 76, selecting characters associated with the virtual input keys, such as letters from the virtual keyboard 76 by touching the touch screen display at the location of the letters, corresponding to the virtual input keys, of the virtual keyboard 76. In exemplary embodiments of the portable electronic device20, the text or data entry is accomplished by a "click to enter" operation. Once the user has selected a character, the character is entered by depressing the virtual input key on the touch screen display 38 with sufficient force to overcome the bias of the touch screen display 38 and the actuation force of the switch 39, to cause movement of the touch screen display 38 and actuation of the switch 39. The selection of the virtual input key 80 (based on the X and Y location on the touch screen display) and the actuation of the switch 39 results in signals that are received by the processer 22, thereby entering the corresponding character for rendering on the touch screen display. The "click to enter" operation provides a tactile feedback confirming the entry to the user, thereby reducing the chance of inadvertent double entry requiring correction. This also reduces the need for additional user interaction and use time thereby, reducing battery consumption. The click entry also allows the user to touch the device and ensure the correct character is selected before entry of that character by clicking.

According to the present example as illustrated in Figure 2, the processor 22 receives a user-selection of an Internet browser application for browsing the Internet by, for example, determination of a touch event at an Internet browser icon (not shown) displayed on the touch screen display 38.

For illustrative purposes, the virtual keyboard is rendered in the portrait mode as shown in Figure 2. Devices, such as accelerometers, can be used to determine the relative orientation of the portable electronic device 20 and change the orientation of the touch screen display accordingly. In the present example, the portrait mode virtual keyboard 76 is a reduced QWERTY keyboard in which multiple alphanumeric characters share virtual input keys or buttons 100. The virtual input keys or buttons 100 are rendered with the alphanumeric characters and other keyboard buttons displayed in an upright position for the user. The portable electronic device 20 can be operated in any suitable mode for determining a user-desired one of the letters upon determination of a touch event at the respective one of the virtual input keys buttons 100 of the virtual keyboard 76. For example, letters can be selected using a single-tap mode, multi-tap mode, a predictive text mode or using any other suitable mode. The portable electronic device 20 according to the present example also includes four physical buttons 102, 104, 106, 108 in the housing 74 for user-selection for performing functions or operations including an "off-hook" button 102 for placing an outgoing cellular telephone call or receiving an incoming cellular telephone call, a Menu button 104 for displaying a context-sensitive menu or submenu, an escape button 106 for returning to a previous screen or exiting an application, and an "on-hook" button for ending a cellular telephone call. The remainder of the buttons shown on the face of the exemplary portable electronic device of Figure 2 are virtual buttons or input keys 100 on the touch screen display 38.

Along with the virtual keyboard, a display area is rendered, which in the present example is a portrait mode display area 90 that is a portrait mode Internet browser display screen 92. The display area is provided in the portrait mode as a result of determination of the orientation at the accelerometer (not shown). The display area is rendered above the portrait mode virtual keyboard 76 when the portable electronic device 20 is in the portrait orientation.

As a result of user touching any of the virtual buttons of the virtual keyboard and actuation of the switch 39, data input received from the virtual keyboard is rendered in a data entry field 94 of the Internet browser display screen 92. As shown, input is received in the form of user selection of characters including letters and symbols by touching ones of the virtual buttons 100 in the portrait mode virtual keyboard 76 and entry by actuation of the switch 39. In the example shown in Figure 2, the user enters "http://www.xyz.c" and the data received is displayed in the data entry field 94 of the portrait mode Internet browser display screen 92.

When entering data, the user may turn the portable electronic device 20 to a landscape orientation. A user may choose to turn the portable electronic device 20 to a different orientation to provide a different keyboard such as to change from a reduced keyboard to a full QWERTY keyboard as in the present example. In another example, the user may also choose to turn the portable electronic device 20 to provide a different display area for the application.

Apart from regular alphanumeric characters, it may be desirable to input special or secondary characters such as, accented characters, extended characters, diacritics, symbols, punctuations, icons, emoticons, etc., during data or text entry for applications such as email, messaging (SMS, MMS, etc.), notepad, and scheduler among others, on the portable electronic device 20. Given the typically small size of the portable electronic device 20, and, therefore, the limited space available for user input and output devices, it is not practical to assign a dedicated virtual input key for each alphabet, number or special character. Although, the screen content on the touch screen display device can be modified depending on the functions and operations being performed, it is desirable to have a convenient, intuitive, and user-friendly way to enter special characters and the like without having to constantly change or refresh the screen content on the touch screen display.

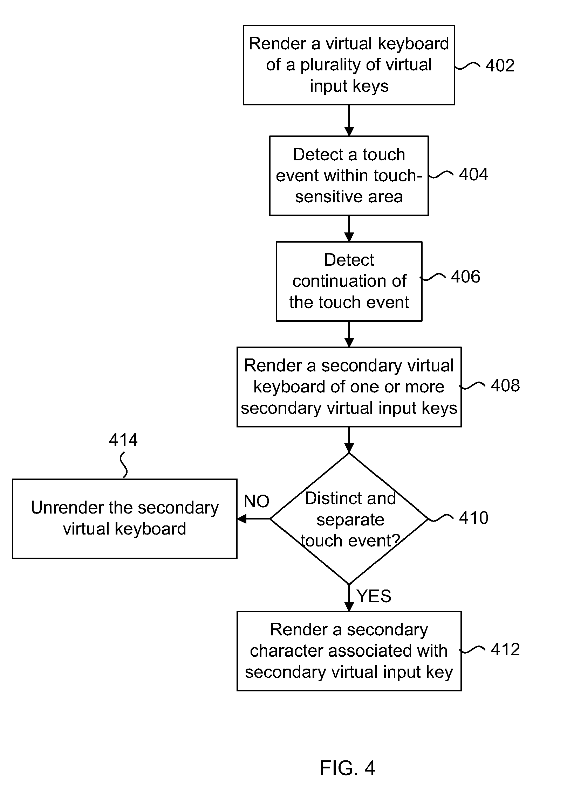

Generally, according to one aspect, there is provided a method of secondary character display and entry in a portable electronic device that has a touch screen display. As illustrated in Figure 4, the method includes rendering a virtual keyboard of a plurality of virtual input keys 100 in a graphical user interface for enabling data or text entry (step 402). Upon detection of a touch event at a virtual input key 100 on the touch screen display (step 404) and upon detection of a continuation of the touch event at the virtual input key 100 (step 406), a secondary virtual keyboard of one or more secondary virtual input keys is rendered on the touch screen display (step 408). The secondary virtual keyboard is associated with the virtual input key. Further, upon detecting a distinct and separate secondary touch event at a secondary virtual input key on the touch screen display (step 410) and receipt of the signal from the switch 39 caused by actuation (step 411), a secondary character associated with the secondary virtual input key is rendered on the touch screen display (step 412). However, if no secondary touch event is detected at step 410, then the secondary virtual keyboard is un-rendered (step 414).

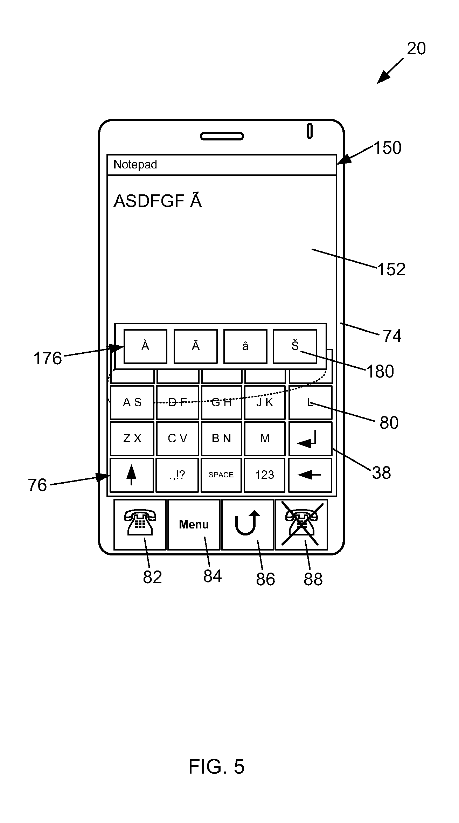

An exemplary embodiment employing the method of secondary character display and entry is shown in Figure 5. In this example, a notepad application 150 is running on the portable electronic device 20 including the virtual keyboard in the notepad graphical user interface (step 402). The data or text entered by the user is rendered or displayed on the text entry and display screen 152. For illustrative purposes, the text "ASDFGF Ã" is shown as the entered text. The text entry for the characters or letters displayed on the virtual input keys 100 of the virtual keyboard is accomplished as described earlier with reference to Figure 2. For example, the user enters text via the virtual keyboard 76, selecting characters associated with the virtual input keys 100, such as letters A, S, D, F, G and again F (for example, the letters A, D and G can be selected by tapping the corresponding virtual input key once, or by moving a finger to the desired virtual input key and then lift it over the top of the desired virtual input key; and the letters S and F can be selected in a "multi-tap" system, by double tapping or double-touching the same virtual input key to select the desired character. Alternatively, the characters associated with a virtual input key 100 can be determined by a disambiguation engine), from the virtual keyboard 76. The selected letter is entered by pressing with sufficient force to move the touch screen display 38 to actuate the switch 39 as described above. The "click to enter" operation described above can be used to reduce data entry errors once the desired characters (in this example, A, S, D, F, and G) are selected and prior to rendering the corresponding character on the touch screen display 152.

In order to enter the special character, "Ã", the user uses a "press-and-hold" or "touch-and-hold" method to invoke the secondary virtual keyboard 176 having a number of secondary virtual input keys 180. In accordance with the method, upon detection of a first touch event at the virtual input key labeled "AS" of the virtual keyboard 76 on the touch screen display (step 404) and upon detection of a continuation of the touch event (for example, "press-and-hold") at the virtual input key (step 406), the secondary virtual keyboard 176 having one or more secondary virtual input keys 180 is rendered (step 408). The secondary virtual keyboard 176 is associated with the virtual input key ("AS" in this example) and has secondary virtual input keys 180 associated with the virtual input key "AS". In the illustrated example, the user has entered the accented special character "Ã" by selecting the secondary virtual input key associated with this character (step 410) and clicking on it by depressing the touch screen 38 with sufficient force as described above (step 411) to enter the character. The secondary character "Ã associated with the secondary virtual input key is thereby rendered on the touch screen display (step 412) upon detecting a distinct and separate secondary touch event (step 410) at the one of the secondary virtual input keys 180 labeled "Ã " of the secondary virtual keyboard 176 on the touch screen display 38 and upon receipt of the signal from the switch 39 as a result of actuation of the switch 39 (step 411). The distinct and separate secondary touch event provides the user with more flexibility and easier mobility in targeting the special character in the secondary virtual keyboard.

Alternatively, the user may slide his/her finger over to the secondary virtual input key 180 on secondary virtual keyboard 176, press with sufficient force to actuate the switch 39 and lift the finger at the location X-Y location corresponding to the secondary virtual input key 180 labeled "Ã". The "lift-off" location after depression of the switch 39 causes a corresponding signal to be sent to the processor 22 that the special character "Ã" has been selected and entered and accordingly renders this character on the touch screen display 152.

In an embodiment, if a distinct and separate touch event does not occur within a predetermined timeout period, the processor 22 of the portable electronic device may unrender or remove from display the secondary virtual keyboard 176 from display on the touch screen display 32 (step 414) to reveal the original virtual keyboard 76. This is desirable if the user incorrectly or inadvertently invokes the secondary virtual keyboard 176, or simply wishes not enter any of the special characters rendered in the secondary virtual input keys 180, thereby obviating the need for user intervention to delete the unwanted character.

If a signal is not received as a result of actuation of the switch 39, the selected character is not entered and the process returns to step 410.

In an alternate embodiment, upon the detecting a continuation of the secondary touch event at the secondary virtual input key 180, a modified version of the secondary character associated with the secondary virtual input key can be rendered on the touch screen display. For example, if the user touches and holds the "Ã" secondary virtual input key, the special character can be modified and rendered as the lower case version "ã" on the touch screen display 152 upon receipt of the signal from the switch 39. The modification is not limited to upper case to lower case conversion or vice-versa, as the special character may be modified to, for example, emoticons or icons in a messaging application. Again, this feature enables the user to enter the modified version of the special character without having to use additional keys, such as a "Shift" key or an "ALT" key.

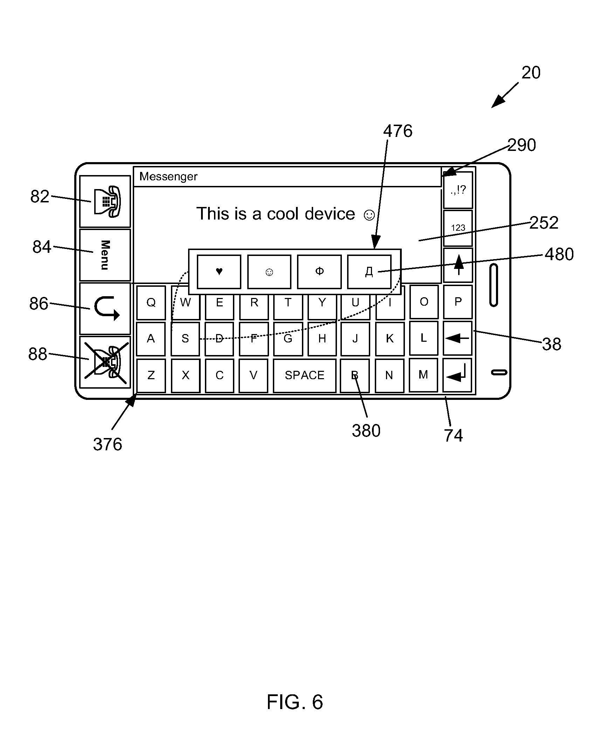

A suitable landscape mode virtual keyboard 376 is shown in Figure 6. As shown, virtual buttons 380 are rendered in a full QWERTY keyboard on the touch screen display 38 of the portable electronic device 20.

A display area is also rendered in the new orientation along with the illustrative data "This is a cool device 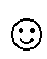 " in the display screen 252 of the messenger application. Thus, a landscape mode display area 290 is rendered including a landscape mode messenger display screen 252. The data entered is rendered as previously described. Since the virtual keyboard 376 is a full QWERTY keyboard, the secondary virtual keyboard 476 can be invoked by a "multi-tap" or "double-touch" method. The secondary virtual keys can be, for example, emoticons, symbols, and foreign language characters.

It will be appreciated that the process shown and described with reference to Figure 4 is simplified for the purpose of the present explanation and other steps and substeps may be included. Alternatively, some of the steps and substeps may be excluded. For example, a continuation of the secondary touch event may be detected and the secondary character may be accordingly modified for rendition on the display screen. In addition, the secondary virtual input keys may be customized based on user preferences, usage statistics, or dynamically based on the historical usage of secondary characters.

In the following description, for purposes of explanation, numerous details are set forth in order to provide a thorough understanding of the present invention. However, it will be apparent to one skilled in the art that these specific details are not required in order to practice the present invention. In other instances, well-known electrical structures and circuits are shown in block diagram form in order not to obscure the present invention. For example, specific details are not provided as to whether the embodiments of the invention described herein are implemented as a software routine, hardware circuit, firmware, or a combination thereof.

Embodiments of the invention may be represented as a software product stored in a machine-readable medium (also referred to as a computer-readable medium, a processor-readable medium, or a computer usable medium having a computer readable program code embodied therein). The machine-readable medium may be any suitable tangible medium, including magnetic, optical, or electrical storage medium including a diskette, compact disk read only memory (CD-ROM), memory device (volatile or non-volatile), or similar storage mechanism. The machine-readable medium may contain various sets of instructions, code sequences, configuration information, or other data, which, when executed, cause a processor to perform steps in a method according to an embodiment of the invention. Those of ordinary skill in the art will appreciate that other instructions and operations necessary to implement the described invention may also be stored on the machine-readable medium. Software running from the machine-readable medium may interface with circuitry to perform the described tasks.

While the embodiments described herein are directed to particular implementations of the portable electronic device and the method of controlling the portable electronic device, it will be understood that modifications and variations may occur to those skilled in the art. All such modifications and variations are believed to be within the sphere and scope of the present disclosure.

## Claims

1. A method of secondary character rendering and entry in a portable electronic device having a touch screen display, the method comprising:
rendering a virtual keyboard of a plurality of virtual input keys in a graphical user interface on the touch screen display;
detecting a touch event at one of the virtual input keys on the touch screen display;
detecting a continuation of the touch event at the one of the virtual input keys;
rendering a secondary virtual keyboard of one or more secondary virtual input keys on the touch screen display in response to detecting the continuation of the touch event, the secondary virtual keyboard being associated with the one of the virtual input keys;
detecting a distinct and separate secondary touch event at the secondary virtual input key on the touch screen display; and
rendering a secondary character associated with the secondary virtual input key on the touch screen display in response to detecting the secondary touch event.

2. The method according to claim 1, wherein continuation of the touch event is a touch and hold event or a double-touch event.

3. The method according to claim 1 or 2, further comprising:
detecting a continuation of the secondary touch event at the secondary virtual input key; and
rendering a modified version of the secondary character associated with the secondary virtual input key on the touch screen display.

4. The method according to claim 3, wherein the modified version of the secondary character associated with the secondary virtual input key is an upper case version of the secondary character.

5. The method according to any preceding claim, comprising unrendering the secondary virtual keyboard in response to an absence of the secondary touch event within a timeout period.

6. The method according to any preceding claim, wherein each virtual input key has one or more characters associated therewith and each secondary virtual input key corresponds to the one or more characters of the virtual input key associated with the secondary virtual keyboard.

7. The method according to any preceding claim, comprising receiving a signal from a switch actuated by depression of the touch screen display prior to rendering and wherein said secondary character is rendered in response to detecting actuation of the switch in addition to detecting the secondary touch event.

8. A portable electronic device comprising:
a touch screen display; and
functional components including a processor connected to the touch screen display, and a memory device for storage of computer-readable program code executable by the processor for performing the steps of the method of any preceding claim.

9. A computer-readable medium having computer-readable code embodied therein for execution by a processor in a computing device for causing to the device to implement the steps of the method of any one of claims 1 to 7.

## Amended claims

### Amended claims in accordance with Rule 137(2) EPC.

**1.** A method of secondary character rendering and entry in a portable electronic device (20) having a touch screen display (38), the method comprising:
rendering a virtual keyboard (76) having a plurality of virtual input keys via a graphical user interface on the touch screen display (38);
detecting a touch event at a location corresponding to one of the virtual input keys on the touch screen display (38);
detecting a continuation of the touch event at the location corresponding to the one of the virtual input keys;
rendering a secondary virtual keyboard having one or more secondary virtual input keys on the touch screen display (38) in response to detecting the continuation of the touch event, the secondary virtual keyboard being associated with the one of the virtual input keys;
detecting a separate secondary touch event at a location corresponding to the secondary virtual input key on the touch screen display (38); and
rendering a secondary character associated with the secondary virtual input key on the touch screen display (38) in response to detecting the secondary touch event.

**2.** The method according to claim 1, wherein continuation of the touch event is a touch and hold event or a double-touch event.

**3.** The method according to claim 1 or 2, further comprising:
detecting a continuation of the secondary touch event at the secondary virtual input key; and
rendering a modified version of the secondary character associated with the secondary virtual input key on the touch screen display (38).

**4.** The method according to claim 3, wherein the modified version of the secondary character associated with the secondary virtual input key is an upper case version of the secondary character.

**5.** The method according to any preceding claim, comprising unrendering the secondary virtual keyboard in response to an absence of the secondary touch event within a timeout period.

**6.** The method according to any preceding claim, wherein each virtual input key has one or more characters associated therewith and each secondary virtual input key corresponds to the one or more characters of the virtual input key associated with the secondary virtual keyboard.

**7.** The method according to any preceding claim, comprising receiving a signal from a switch (39) actuated by depression of the touch screen display (38) prior to rendering and wherein said secondary character is rendered in response to detecting actuation of the switch (39) in addition to detecting the secondary touch event.

**8.** A portable electronic device (20) comprising:
a touch screen display (38); and
functional components including a processor (22) connected to the touch screen display, and a memory device (28, 30), the memory device (28, 30) having computer-readable code executable by the processor (22) to cause the device to perform the steps of the method of any one of claims 1 to 7.

**9.** A computer-readable medium having computer-readable code embodied therein for execution by a processor (22) in a portable electronic device (20) for causing the device (20) to perform the steps of the method of any one of claims 1 to 7.
